# EUROPÄISCHE PATENTSCHRIFT

(11) **EP 1 471 792 B1**
(45) Veröffentlichungstag und Bekanntmachung des Hinweises auf die Patenterteilung: **10.05.2006**
(21) Anmeldenummer: 03706349.2
(22) Anmeldetag: 08.01.2003
(51) Int. Cl.: A22C 15/00

(54) **AUFHÄNGEEINRICHTUNG FÜR LEBENSMITTEL**
SUSPENSION DEVICE FOR FOOD ITEMS
DISPOSITIF DE SUSPENSION POUR ALIMENTS

(30) Priorität: 02.02.2002 DE 20201564 U
(43) Veröffentlichungstag der Anmeldung: 03.11.2004
(73) Patentinhaber: Frans Vermee GmbH, 53424 Remagen (DE)
(72) Erfinder: VERMEE, Frans, 53424 Remagen (DE); LARIN, Leonid, 127635 Moskau (RU)
(74) Vertreter: von Kirschbaum, Alexander
(86) Internationale Anmeldenummer: PCT/EP2003/000094
(87) Internationale Veröffentlichungsnummer: WO 2003/065815

(56) Entgegenhaltungen:
- CH-A- 645 781
- FR-A- 1 281 537
- US-A- 4 227 668

## Beschreibung

Die Erfindung betrifft eine Aufhängeeinrichtung für Lebensmittel, insbesondere für Wurstwaren und dgl. Eine derartige Aufhängeeinrichtung ist aus z.B. CH-A-645 781 bekannt.

Wurstwaren werden beispielsweise zum Trocknen oder Räuchern mit einer Kordel oder Schnur versehen, um die Wurstware aufhängen zu können. Die Kordel oder Schnur dient ferner auch zum Aufhängen der Wurstware in Geschäften. Wurstware wird in schlauchförmige Hüllen, wie Kunst- oder Naturdärme, gefüllt und die einzelnen Wurstabschnitte werden durch Zusammenquetschen und Verschließen der Schlauchhülle mit Hilfe von Klipps, die üblicherweise aus Metall sind, hergestellt. Hierbei werden die beiden Enden einer eine Schlaufe bildenden Aufhängeschnur beim Verquetschen der Klipps mit eingeklemmt und somit durch den Klipp gehalten. Das Verwenden derartiger Kordeln oder Schnüre hat den Nachteil, dass diese beim Räuchern, Kochen oder Lagern der Wurstware beispielsweise Fett oder andere Inhaltsstoffe der Wurst aufnehmen. Dies führt dazu, dass die Bakterienkonzentration insbesondere im Bereich der offenen Wurstenden zunimmt. Ferner ist das maschinelle Handhaben und Zuführen einer Schlaufe aus einer Schnur äußerst schwierig und aufwendig.

Aufgabe der Erfindung ist es, eine einfach mit Lebensmitteln, insbesondere Wurstwaren, verbindbare Aufhängeeinrichtung zu schaffen.

Die Lösung der Aufgabe erfolgt erfindungsgemäß durch die Merkmale des Anspruchs 1.

Die erfindungsgemäße Aufhängeeinrichtung für Lebensmittel, insbesondere für Wurstwaren und dgl., weist einen Aufhängeteil und einen Befestigungsteil auf. Der Aufhängeteil weist eine Aufhängeöffnung zum Aufhängen des Lebensmittels an einem Haken oder dgl. auf. Das Befestigungsteil ist mit dem Aufhängeteil verbunden und weist eine Aufnahmeöffnung auf. Die Aufnahmeöffnung dient zur Aufnahme eines Teils einer Lebensmittelhülle. Wird die erfindungsgemäße Aufhängeeinrichtung beispielsweise für Wurstwaren verwendet, so ist durch die Aufnahmeöffnung ein Teil der schlauchförmigen Wursthülle geführt. Hierbei handelt es sich um den Teil der Wursthülle, der im Bereich des Klipps zusammengequetscht bzw. gerafft ist. Bei der Aufnahmeöffnung kann es sich hierbei um eine beispielsweise zu einer Seite des Befestigungsteils hin offenen, schlitzförmigen Öffnung handeln, in die die geraffte Wursthülle seitlich eingeschoben wird. Hierbei ist durch das seitliche Einschieben ein Herausrutschen vermieden. Hierzu kann zusätzlich auch eine Verschlusseinrichtung zum Verschließen der Aufnahmeöffnung vorgesehen sein.

Die erfindungsgemäße Aufhängeeinrichtung hat insbesondere den Vorteil, dass sie unabhängig vom Verschließen der Wurstware oder dgl. an dieser durch einfaches Aufstecken befestigt werden kann. Ein aufwendiges und schwieriges Zuführen einer Schlaufe aus Schnur ist nicht erforderlich. Das Verschließen der Wurst durch einen Klipp ist somit unabhängig von dem Befestigen der Aufhängeeinrichtung an der Wurstware. Ferner weist die erfindungsgemäße Einrichtung den Vorteil auf, dass sie aus Kunststoff oder einem anderen Material hergestellt sein kann, das kein Fett oder andere Teile des Lebensmittels aufnimmt. Hierdurch ist ein Auftreten von erhöhter Bakterienkonzentration vermieden.

Das Befestigungsteil weist erfindungsgemäß einen mit der Aufnahmeöffnung verbundenen Zuführschlitz auf. Hierbei ist die Breite des Schlitzes kleiner als die Breite bzw. der Durchmesser der vorzugsweise runden Aufnahmeöffnung. Hierdurch ist ein Herausrutschen der in der Aufnahmeöffnung aufgenommenen Lebensmittelhülle vermieden. Besonders bevorzugt ist es, dass die Aufnahmeöffnung vorzugsweise vollständig geschlossen ist und der Zuführschlitz als Einschnitt in dem Befestigungsteil ausgebildet ist. Da das Befestigungsteil vorzugsweise aus einem flexiblen Material besteht, kann die Aufhängeeinrichtung aufgesteckt werden, wobei der Zuführschlitz aufgeweitet wird, bis die Lebensmittelhülle in der Aufnahmeöffnung ist und sich die Aufnahmeöffnung anschließend automatisch wieder schließt. Hierdurch ist ein sicheres Halten der Aufhängeeinrichtung an der Wurstware oder dgl. sichergestellt.

Um das Zuführen zu vereinfachen, ist der Zuführschlitz vorzugsweise keilförmig oder weist eine keilförmige Öffnung auf.

Vorzugsweise ist die erfindungsgemäße Aufhängeeinrichtung einstückig und besonders bevorzugt aus Kunststoff hergestellt. Hierbei ist es möglich, die erfindungsgemäße Aufhängeeinrichtung als flaches Bandmaterial herzustellen. Vorzugsweise erfolgt die Herstellung der Aufhängeeinrichtung im Spritzgussverfahren oder durch Extrusion. Da es mit modernen Klipps möglich ist, Wurstware mit Kunststoff-Klipps anstelle mit Klipps aus Metallteilen zu verschließen, weist eine erfindungsgemäß aus Kunststoff hergestellte Aufhängeeinrichtung ferner den Vorteil auf, dass die Wursthülle, der Klipp und die Aufhängung aus Kunststoff hergestellt sein können, so dass ein einfaches Recyceln dieser Materialien möglich wird.

Eine zweite bevorzugte Ausführungsform der erfindungsgemäßen Aufhängeeinrichtung weist ebenfalls ein Aufhängeteil und ein mit diesem verbundenes Befestigungsteil auf. Erfindungsgemäß ist das Befestigungsteil und das Aufhängeteil hierbei einstückig und aus Kunststoff hergestellt. Anstelle einer Aufnahmeöffnung weist das Befestigungsteil erfindungsgemäß beispielsweise einen stabförmigen oder ähnlichen Ansatz auf. Dieser Ansatz wird beim Verschließen der Lebensmittelware mit einem Klipp in diesen mit eingeklemmt. Eine derartige Aufhängeeinrichtung weist den Vorteil auf, dass sie aus Kunststoff hergestellt sein kann und somit nicht die Hygiene-Nachteile einer Schnur aufweisen. Ferner können insbesondere aus einem Bandmaterial bzw. als Bandmaterial hergestellte Aufhängeeinrichtungen erheblich leichter maschinell zugeführt werden als Schnüre.

Ferner betrifft die Erfindung ein Bandmaterial mit mehreren hintereinander angeordneten und miteinander verbundenen Aufhängeeinrichtungen, wie vorstehend beschrieben. Ein derartiges, vorzugsweise aufwickelbares, Band kann mit geeigneten Transporteinrichtungen, z.B. über Druckluftkanäle, automatisch der Verpackungsmaschine zugeführt werden. Es ist somit ein automatisches Befestigen einer erfindungsgemäßen Aufhängeeinrichtung an einer Wurstware im Bereich des Klipps möglich.

Nachfolgend wird die Erfindung anhand bevorzugter Ausführungsformen unter Bezugnahme auf die Zeichnungen näher erläutert.

Es zeigen:
- Fig.1: eine schematische perspektivische Ansicht einer ersten Ausführungsform der Aufhängeeinrichtung,
- Fig. 2: eine schematische Draufsicht der in Fig. 1 dargestellten ersten Ausführungsform,
- Fig. 3: eine schematische perspektivische Ansicht eines Bandes mehrerer hintereinander angeordneter und miteinander verbundener Aufhängeeinrichtungen gemäß der ersten Ausführungsform,
- Fig. 4: eine schematische Seitenansicht einer Wurstware mit einer daran befestigten Aufhängeeinrichtung,
- Fig. 5: eine schematische Draufsicht einer Wurstware und einer an der Wurstware zu befestigenden Aufhängevorrichtung,
- Fig. 6: eine schematische Draufsicht einer zweiten Ausführungsform,
- Fig. 7: eine schematische Draufsicht einer dritten Ausführungsform der Aufhängeeinrichtung vor dem Befestigen an einer Wurstware,

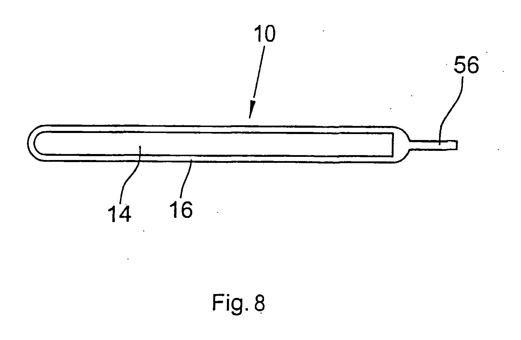

- Fig.8: eine Draufsicht einer vierten Ausführungsform der Aufhängeeinrichtung.

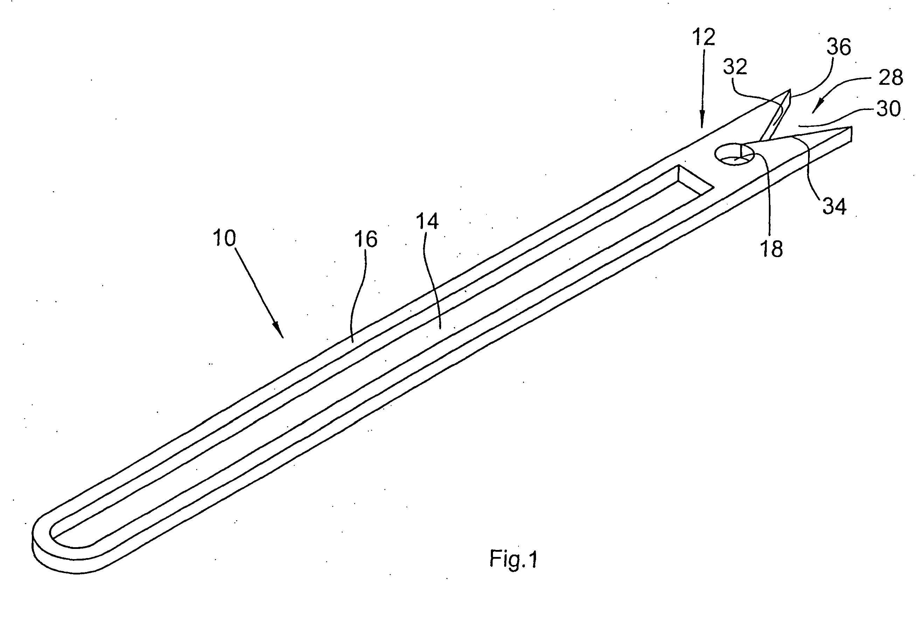

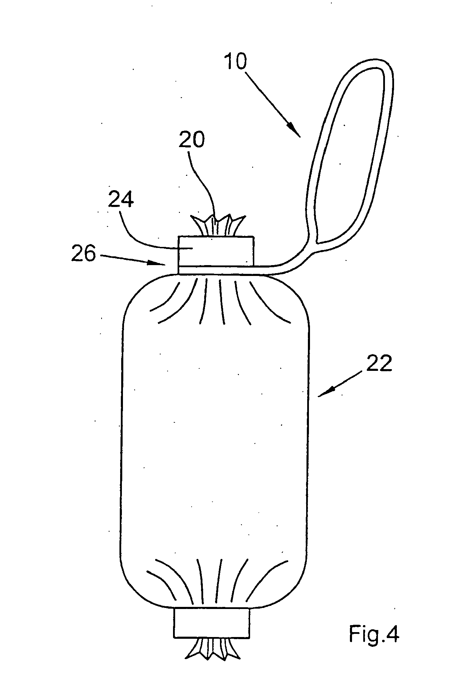

Die in den Fign. 1-3 dargestellte erste Ausführungsform der erfindungsgemäßen Aufhängeeinrichtung weist ein Aufhängeteil 10 und ein Befestigungsteil 12 auf. Die vorzugsweise aus einem flachen Material, insbesondere Kunststoff, hergestellte, einstückig ausgebildete Aufhängeeinrichtung weist im Bereich des Aufhängeteils 10 eine Aufhängeöffnung 14 auf. Der die Aufhängeöffnung 14 umgebende rahmenförmige Steg ist hierbei flexibel und elastisch ausgebildet, so dass dieser zur Ausbildung einer Schlaufe (Fig. 4) einfach verformt werden kann.

Das Befestigungsteil 12, das ebenfalls flach ausgebildet und vor dem Befestigen an einem Lebensmittel, insbesondere der Wurstware, in der selben Ebene angeordnet ist, weist eine Aufnahmeöffnung 18 auf. Die Aufnahmeöffnung 18 dient zur Aufnahme einer Lebensmittelhülle 20 (Fig. 4). Ein Bereich einer Wurstware 22 wird zum Verschließen durch einen vorzugsweise aus Metall oder Kunststoff bestehenden Klipp 24 zusammengedrückt, wobei ein Halsbereich 26 entsteht. Dieser Halsbereich 26 ist bei aufgesteckter Aufhängeeinrichtung innerhalb der Aufnahmeöffnung 18 angeordnet.

Zum leichteren Aufstecken der Aufhängeeinrichtung weist das Befestigungsteil 12 einen Zuführschlitz 28 auf. Der Zuführschlitz weist eine keilförmige Öffnung 30 auf, wobei die die keilförmige Öffnung 30 ausbildenden Kanten 32,34 in Richtung der Aufnahmeöffnung 18 aufeinander zulaufen. Beim Aufstecken der Aufhängeeinrichtung werden die beiden Kanten 32,34 durch den halsförmigen Bereich 26 der Wursthülse 20 auseinandergedrückt, bis der Hals 26 innerhalb der Aufnahmeöffnung 18 angeordnet ist.

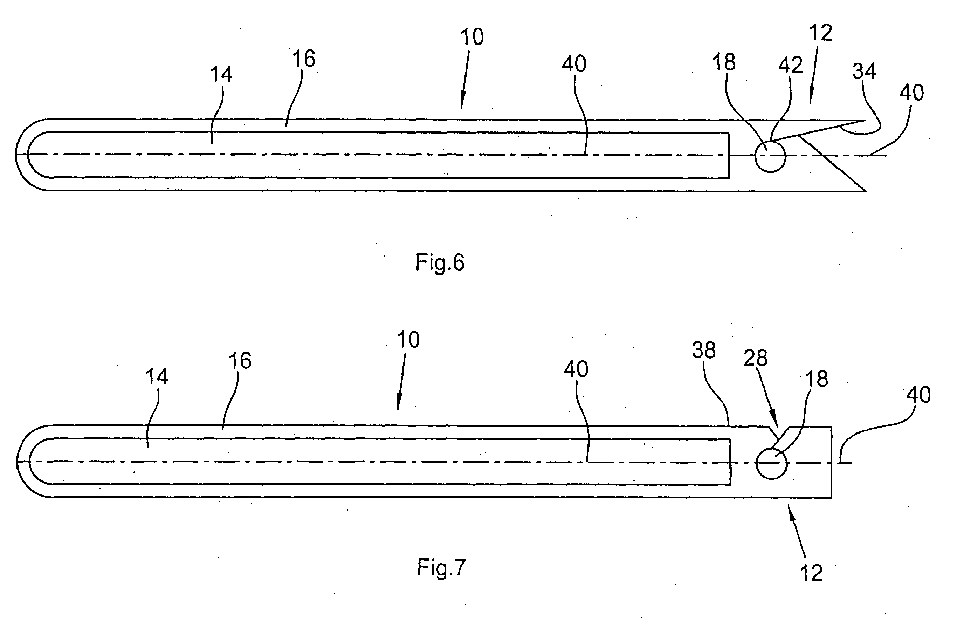

Der Zuführschlitz 28 verläuft von einer Außenseite 36 des Befestigungsteils 12 in Richtung der Aufnahmeöffnung 18. In dem in Fig. 1 dargestellten Ausführungsbeispiel der Erfindung ist die Außenseite die in Längsrichtung der Aufhängeeinrichtung gesehen vordere Kante oder Außenseite 36. Vorzugsweise verläuft der Zuführschlitz von einer Außenseite 38 (Fig. 7), die in Längsrichtung der Aufhängeeinrichtung verläuft, nach innen in Richtung der Aufnahmeöffnung 18.

Zumindest eine der beiden Kanten 32,34 des Zuführschlitzes 28 verlaufen geradlinig zur Aufnahmeöffnung 18. Im Bereich der Aufnahmeöffnung 18 sind die beiden Kanten 32,34 vorzugsweise parallel zueinander angeordnet bzw. liegen im dargestellten Ausführungsbeispiel aneinander an. Hierdurch ist ein Herausrutschen des Halses 26 aus der Aufhängeöffnung 18 beim Aufhängen der Wurstware 22 vermieden. Die beiden Kanten 32,34 sind im dargestellten Ausführungsbeispiel somit Y-förmig.

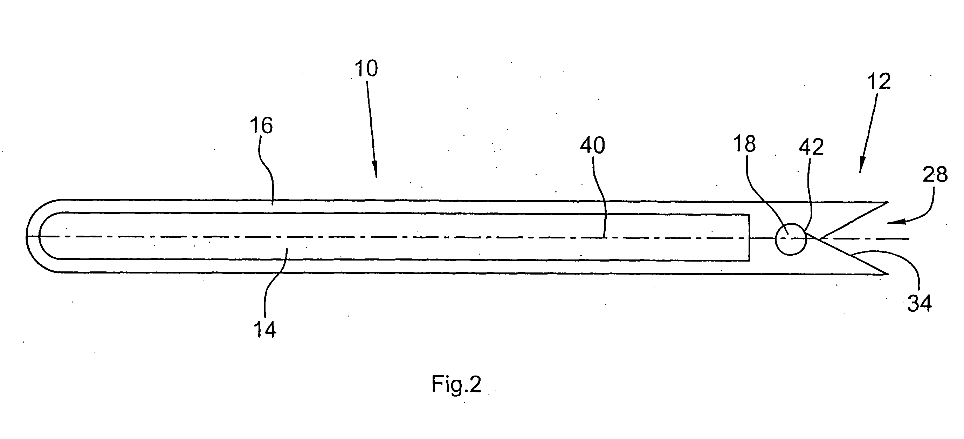

Besonders bevorzugt ist es, dass der Zuführschlitz 28 außerhalb einer Aufhängeachse 40 verläuft (Fig. 2). Hierbei ist ein Punkt 42, an dem die Kante 34 die Aufnahmeöffnung 18 berührt, vorzugsweise außerhalb der Aufhängeachse 40 angeordnet. Bei der Aufhängeachse 40 handelt es sich um die in Längsrichtung der Aufhängeeinrichtung verlaufende Mittelachse.

Bei einer besonders bevorzugten Ausführungsform (Fig. 7) ist der Zuführschlitz 28 im Wesentlichen in einem Winkel von 90° zu der Aufhängeachse 40 angeordnet. Vorzugsweise beträgt dieser Winkel zur Aufhängeachse 40 20°-160°, besonders bevorzugt 50°-130°.

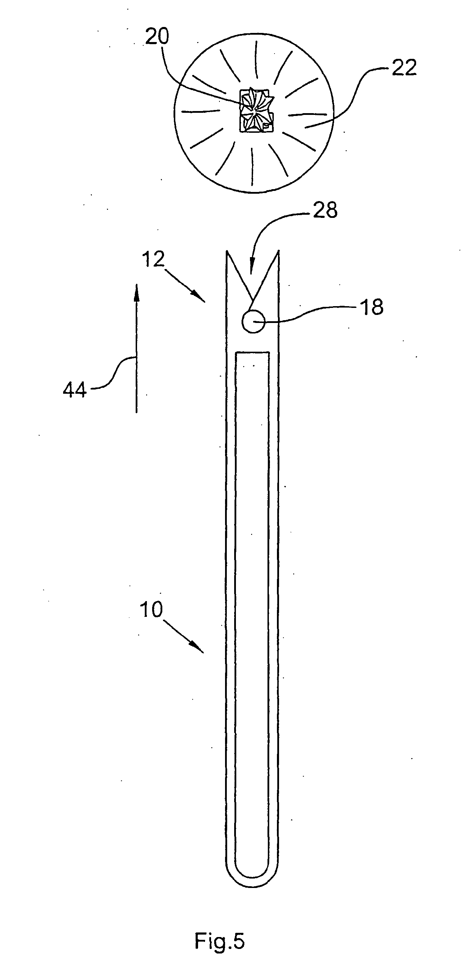

Zum Befestigen der Aufhängeeinrichtung wird diese somit in Richtung eines Pfeils 44 (Fig. 5) in Richtung der Wurstware 22 geschoben, wobei der Hals 26, der durch die Wursthülle gebildet ist, den Zuführschlitz aufgrund seiner Keilform aufweitet, bist dieser wieder zuschnappt, sobald der Hals 26 innerhalb der Aufnahmeöffnung 18 angeordnet ist.

Bei der zweiten bevorzugten Ausführungsform (Fig. 6), die prinzipiell der ersten bevorzugten Ausführungsform entspricht, ist der Punkt 42, an dem sich eine erste Kante 34 mit der Aufnahmeöffnung 18 schneidet, noch weiter von der Aufhängeachse 40 entfernt als im ersten Ausführungsbeispiel. Ansonsten sind die erste und zweite Ausführungsform identisch.

Auch bezüglich der dritten Ausführungsform der Aufhängeeinrichtung (Fig. 7) ist die Art des Zuführschlitzes in dem dargestellten Ausführungsbeispiel identisch zu der Art der Zuführschlitze in den anderen beiden Ausführungsbeispielen. Der einzige Unterschied besteht darin, dass der Zuführschlitz seitlich bezogen auf die Aufhängeachse 40 angeordnet ist, so dass die Öffnung des Schlitzes an einer in Längsrichtung verlaufenden Außenseite 38 vorgesehen ist.

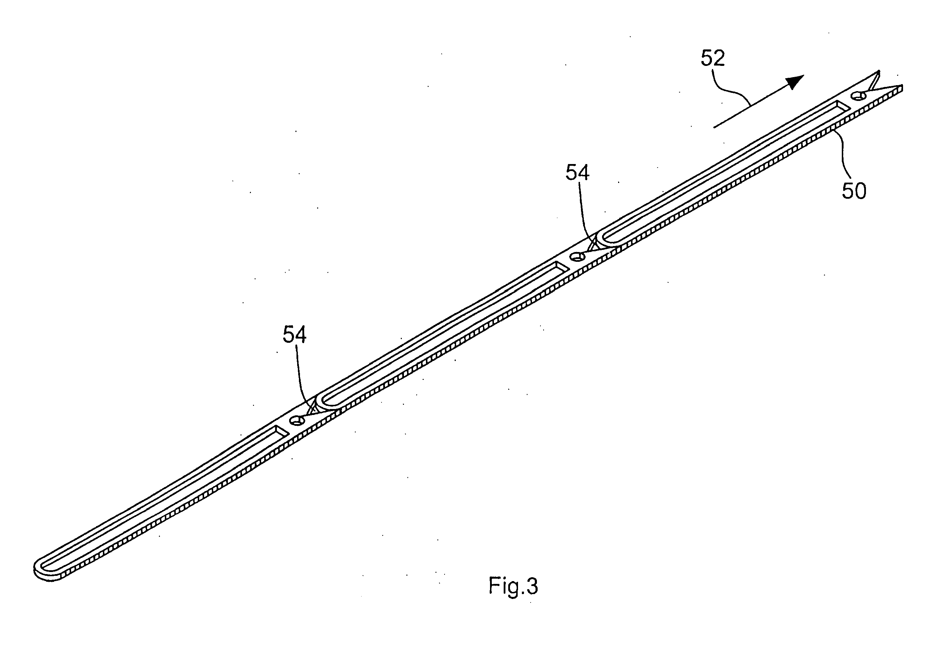

Besonders bevorzugt ist es, die erfindungsgemäßen Aufhängeeinrichtungen als Band herzustellen (Fig. 3). Hierbei sind mehrere Aufhängeeinrichtungen, beispielsweise der ersten Ausführungsform, hintereinander angeordnet und miteinander verbunden. Es ist möglich, dieses Band auf einer Rolle aufzuwickeln und durch Transporteinrichtungen, beispielsweise eine an den Außenkanten an der Aufhängeeinrichtung vorgesehenen Riffelung 50, zu transportieren. Durch den Transport kann die jeweils vordere bzw. erste Aufhängeeinrichtung derart an die Wurstware 22 herangeführt werden, dass die Aufhängeeinrichtung, wie vorstehend beschrieben, am Hals 26 der Wurstware 22 befestigt wird. Hierzu wird das Band in Richtung eines Pfeils 52 geschoben.

Der Transport des Bandes ist beispielsweise auch über geeignete beispielsweise Stifte aufweisende Transportbänder möglich, die in die Öffnungen 54 zwischen den aneinander anliegenden Aufhängeeinrichtungen eingreifen. Es ist ferner möglich, das Band beispielsweise mit Druckluft oder dgl. zuzuführen.

## Patentansprüche

1. Aufhängeeinrichtung für Lebensmittel, insbesondere Wurstwaren, mit
einem eine Aufhängeöffnung (14) aufweisenden Aufhängeteil (10) und
einem mit dem Aufhängeteil (10) verbundenen Befestigungsteil (12), **dadurch gekennzeichnet, daß**
das Befestigungsteil (12) einen mit einer zur Aufnahme eines Teils einer Lebensmittelhülle vorgesehenen Aufnahmeöffnung (18) verbundenen Zuführschlitz (28) aufweist.

2. Aufhängeeinrichtung nach Anspruch 1, **dadurch gekennzeichnet, dass** der Zuführschlitz (28) eine keilförmige Öffnung (30) aufweist.

3. Aufhängeeinrichtung nach Anspruch 1 oder 2, **dadurch gekennzeichnet, dass** der Zuführschlitz (28) eine von einer Außenseite (36,38) des Befestigungsteils (12), insbesondere gerade zur Aufnahmeöffnung (18) verlaufende Kante (34) aufweist.

4. Aufhängeeinrichtung nach einem der Ansprüche 1-3, **dadurch gekennzeichnet, dass** die Kanten (32,34) des Zuführschlitzes im Bereich der Aufnahmeöffnung (18) parallel zueinander, insbesondere aneinander anliegend, verlaufen.

5. Aufhängeeinrichtung nach einem der Ansprüche 1-4, **dadurch gekennzeichnet, dass** die Kanten (32,34) des Zuführschlitzes (28) Y-förmig verlaufen.

6. Aufhängeeinrichtung nach einem der Ansprüche 1-5, **dadurch gekennzeichnet, dass** der Zuführschlitz (28) außerhalb einer Aufhängeachse (40) mit der Aufnahmeöffnung (18) verbunden ist.

7. Aufhängeeinrichtung nach einem der Ansprüche 1-6, **dadurch gekennzeichnet, dass** der Zuführschlitz (28) im Bereich der Aufnahmeöffnung in einem Winkel zur Aufhängeachse (40) verläuft, der vorzugsweise 20-160°, besonders bevorzugt 50-130° beträgt.

8. Aufhängeeinrichtung nach einem der Ansprüche 1-7, **dadurch gekennzeichnet, dass** die Aufhängeeinrichtung einstückig insbesondere aus Kunststoff ist.

9. Aufhängeeinrichtung nach einem der Ansprüche 1-8, **dadurch gekennzeichnet, dass** die Aufhängeeinrichtung ein flaches Bandmaterial ist.

10. Aufhängeeinrichtung nach einem der Ansprüche 1-9, **dadurch gekennzeichnet, dass** an mindestens einer Außenseite des Aufhängeteils (10) und/oder des Befestigungsteils (12) eine Transporteinrichtung (50) vorgesehen ist.

11. Band mit mehreren hintereinander angeordneten und miteinander verbundenen Aufhängeeinrichtungen nach einem der Ansprüche 1-10.

## Claims

1. A suspension device for food, especially sausages, comprising
a suspension portion (10) having a suspension opening (14), and
a fastening portion (12) connected with said suspension member (10),
**characterized in that**
said fastening portion (12) comprises an insertion slot (28) connected with a receiving opening (18) for receiving a part of a food item casing.

2. The suspension device of claim 1, **characterized in that** the insertion slot (28) has a wedge-shaped opening (30).

3. The suspension device of claim 1 or 2, **characterized in that** the insertion slot (28) has an edge (34) extending, in particular straight, to the receiving opening (18) from an outer side (36, 38) of the fastening portion (12).

4. The suspension device of one of claims 1-3, **characterized in that** the edges (32, 34) of the insertion slot extend in parallel with each other, in particular abutting each other, in the region of the receiving opening (18).

5. The suspension device of one of claims 1-4, **characterized in that** the edges (32, 34) of the insertion slot (28) extend Y-shaped.

6. The suspension device of one of claims 1-5, **characterized in that** the insertion slot (28) is connected with the receiving opening (18) offset from an axis of suspension (40).

7. The suspension device of one of claims 1-6, **characterized in that**, in the region of the receiving opening, the insertion slot (28) extends under an angle of preferably 20-160°, more preferably 50-130° with the axis of suspension (40).

8. The suspension device of one of claims 1-7, **characterized in that** the suspension device is made integrally, in particular of plastic material.

9. The suspension device of one of claims 1-8, **characterized in that** the suspension device is a flat band material.

10. The suspension device of one of claims 1-9, **characterized in that** a transport means (50) is provided at at least one outer side of the suspension portion (10) and/or the fastening portion (12).

11. A band comprising a plurality of successively arranged and interconnected suspension devices of one of claims 1-10.

## Revendications

1. Structure de suspension pour des produits alimentaires, en particulier des produits de charcuterie, comportant
une partie de suspension (10) présentant une ouverture de suspension (14) et
une partie de fixation (12) reliée à la partie de suspension (10),
**caractérisée en ce que**
la partie de fixation (12) présente une fente d'accès (28) reliée à une ouverture de réception (18) prévue pour recevoir une partie d'une enveloppe d'emballage de produit alimentaire.

2. Structure de suspension selon la revendication 1, **caractérisée en ce que** la fente d'accès (28) présente une ouverture en forme de coin (30).

3. Structure de suspension selon la revendication 1 ou 2, **caractérisée en ce que** la fente d'accès (28) présente un bord (34) s'étendant depuis un côté extérieur (36, 38) de la partie de fixation (12), en particulier suivant une ligne droite jusqu'à l'ouverture de réception (18).

4. Structure de suspension selon l'une des revendications 1 à 3, **caractérisée en ce que** les bords (32, 34) de la fente d'accès s'étendent parallèlement l'un à l'autre, en particulier de façon contiguë l'un à l'autre, dans la région de l'ouverture de réception (18).

5. Structure de suspension selon l'une des revendications 1 à 4, **caractérisée en ce que** les bords (32, 34) de la fente d'accès (28) s'étendent sous la forme d'un Y.

6. Structure de suspension selon l'une des revendications 1 à 5, **caractérisée en ce que** la fente d'accès (28) est reliée à l'ouverture de réception (18) en dehors d'un axe de suspension (40).

7. Structure de suspension selon l'une des revendications 1 à 6, **caractérisée en ce que**, dans la région de l'ouverture de réception, la fente d'accès (28) forme, par rapport à l'axe de suspension (40), un angle, qui est, de préférence, de 20 à 160°, de façon plus particulièrement préférée de 50 à 130°.

8. Structure de suspension selon l'une des revendications 1 à 7, **caractérisée en ce que** la structure de suspension_est formée en une seule pièce, en particulier en matière plastique.

9. Structure de suspension selon l'une des revendications 1 à 8, **caractérisée en ce que** la structure de suspension est un matériau plat en forme de bande.

10. Structure de suspension selon l'une des revendications 1 à 9, **caractérisée en ce que**, sur au moins un côté extérieur de la partie de suspension (10) et/ou de la partie de fixation (12), il est prévu une structure de transport (50).

11. Bande comprenant plusieurs structures de suspension, selon l'une des revendications 1 à 10, disposées l'une à la suite de l'autre et reliées entre elles.
